# EUROPEAN PATENT APPLICATION

(11) **EP 1 376 025 A1**
(43) Date of publication of application: **02.01.2004**
(21) Application number: 03076994.7
(22) Date of filing: 26.06.2003
(51) Int. Cl.: F24H 4/02

(54) **Heating apparatus and method for space heating and/or sanitary water heating**

(30) Priority: 26.06.2002 NL 1020944
(71) Applicant: GASTEC Technology B.V., 7327 AC Apeldoorn (NL)
(72) Inventor: van Noordenburg, Frederik Cornelis Marianus, 3813 TC Amersfoort (NL)
(74) Representative: Prins, Adrianus Willem

(57) **Abstract**

An apparatus and method for effecting at least space heating and/or sanitary water heating, wherein, with a relatively great heat demand and/or with relatively large differences between an ambient temperature of a space or structure of spaces to be heated and the desired temperature in said space or spaces, substantially use is made of a fired heating unit such as a central heating boiler with burner, while with a relatively small heat demand and/or relatively small differences between an ambient temperature of a space or structure of spaces to be heated and the desired temperature in said space or spaces, substantially use is made of a heat pump, in particular an electrically controlled heat pump, while at least a portion of the required heat is extracted from the ambient air.

## Description

The invention relates to a heating apparatus. In particular, the invention relates to a heating apparatus for space heating and/or sanitary water heating.

From practice, central heating apparatuses are known. A heat exchanger is heated with the aid of a burner which is, for instance, gas-fired or fired by a similar fossil fuel. A water channel is provided in the heat exchanger, which water channel is connected to or forms part of a space heating circuit. With the aid of the heat exchanger, heat is supplied to water flowing through this circuit depending on, for instance, the heat demand.

Further, heating and cooling systems of the water pump type are known. These are for instance used in cooling apparatus. Use can then be made of a liquid or liquid/gas mixture which, with the aid of pumping means, is circulated through a circuit in which an evaporator is included. The evaporator can supply heat to or extract heat from the surroundings, which heat comes from or, conversely, can be supplied to a different space, so that cooling or, conversely, heating of this space can be obtained.

One object of the invention is to provide a heating apparatus with which, in different seasons, an optimal heating can be obtained for spaces and/or sanitary water.

Another object of the invention is to provide a heating apparatus with which at any desired moment an improved and preferably optimal efficiency is obtained.

A further object of the invention is to provide a heating apparatus with which consumption of energy can be kept relatively limited, with which emissions are kept relatively low and with which manufacture, build-in, use and/or maintenance are relatively simple and economically advantageous.

These and further advantages are achieved with a heating apparatus according to the invention, in particular characterized by the features of claim 1.

A heating apparatus according to the invention utilizes in a surprising manner a combination of a burner-controlled heating unit and a heat pump. By coupling these together to at least one heating circuit, in particular to a space heating circuit, the possibility is offered, for instance depending on the ambient temperature, the heat demand and the desired space temperature, to choose between the burner-controlled heating unit, the second heating unit with a heat pump, or a combination thereof, so that each time, for instance efficiency, fuel consumption, emission and the like can be optimized.

With the aid of the heat pump, use can be made in a suitable manner of, for instance, heat, at least energy from ambient air, flue gases or the like which is particularly advantageous when the ambient temperature is relatively high, as it is in summer and preceding and following parts of spring and autumn, respectively. Naturally, the use of ambient temperature for space heating and/or sanitary water heating is energetically and economically advantageous. In particular with a greater heat demand and/or greater temperature differences, use of a burner-controlled heating apparatus, in particular a heating unit with a burner fired by fossil fuel, appears to be advantageous. With it, the desired amount of heat can be controlled relatively rapidly. Optionally, if desired, the first and second heating unit can be arranged such that residual heat in flue gases of the first heating unit can be used in the second heating unit.

Preferably, a second heating unit for use with a heating apparatus according to the invention comprises an electrically driven heat pump unit, in particular a heat pump with electric pumping unit, so that controlled amounts of liquid can be circulated.

It is preferred that with a heating apparatus according to the invention, return water from the heating circuit is first guided through a second heat exchanger, included in the circuit of the second heating unit, before this water is led through to the first heating unit and returned to the heating circuit. In this way, energetically favorable control is realized.

In a further advantageous embodiment, a heating apparatus according to the invention is further characterized by the features of claim 6.

Including the second heating unit in a channel through which, during use, ambient air, in particular outside air can be led, offers the advantage that the second heat exchanger is well protected and air can be guided therealong in a controlled manner. Including a fan in this channel then offers the advantage that the air can simply be forced along or through the second heat exchanger.

The air supply means and flue gas discharge means of the first heating unit can be provided at a distance from the above-mentioned channel. However, it is preferred that flue gas discharge means of the first heating unit terminate in this channel, more in particular, viewed in flow direction, before the evaporator. Thus, the advantage is achieved that residual heat in these flue gases can be used in or near the evaporator.

In further elaboration, a heating apparatus according to the invention is further characterized by the features of claim 12.

Including the first heat exchanger and the burner of the first heating unit in the channel offers the advantage that heat from the burner can also be used near the evaporator, while air supply to the burner is possible in a particularly simple manner.

Viewed in flow direction, the first heat exchanger and the evaporator can be arranged one after the other, such that substantially all flue gases from the burner are forced to pass the evaporator. However, the first heat exchanger and the evaporator can also be arranged side by side in the channel. To that end, for instance a part of the channel can be divided into a first and second channel part, while the first and second heat exchanger are included each in one of the channel parts. Valve means can be provided for guiding air through the first and/or the second channel part, so that the manner in which the air will flow along and/or through the respective heat exchanger and/or evaporator can be controlled. Naturally, also the first heat exchanger can be included in one of the channel parts while the other channel part is, for instance, substantially empty and the evaporator is included in a channel part behind the first and second channel part. Consequently, when the first heating unit is in use, a choice can be made to guide a portion of the air around it and mix it behind the first heating unit with flue gases from the burner of the first heating unit before this mixture is guided along the evaporator.

Leakage means can be provided such that, irrespective of the position of the valve means, at least a portion of the air flowing through the channel flows via the leakage means into the channel part where the first heat exchanger is not disposed, while, moreover, through the use of leakage means, mixing of flue gases with ambient air can be effected in a simple manner.

In a further advantageous embodiment, the first heat exchanger and the evaporator are at least partly integrated.

In a further advantageous embodiment, the first heating unit determines a first circuit, the second heating unit a second circuit and the heating circuit a third circuit, while the first, second and third circuit are led through the same heat exchanger and are separated from each other. As a result, in the first circuit, a particularly suitable liquid can be selected for heat transfer, which liquid does not need to be guided through the heating circuit.

The invention further relates to a method for effecting at least space heating and/or sanitary water heating, characterized by the features of claim 21.

With such a method, each time, in an optimal manner, a heating apparatus can be controlled, depending on, for instance, the momentaneous heat demand, ambient temperature, temperature differences, desired rate of heating, desired capacity, available fuel or other technical or economical reasons. The fist and second heating unit can be controlled independently of each other, while they can also be controlled together, in particular such that heat coming from the first heating unit can be used in the second heating unit. In particular, this can also be advantageous with relatively low ambient temperatures. The fact is that if the evaporator were to become cold to such a degree that freezing could occur, it can be unfrozen again, at least freezing can be prevented by guiding heat from the first heating unit along or through the evaporator.

In clarification of the invention, exemplary embodiments of a heating apparatus and method according to the invention will be further elucidated with reference to the drawing. In the drawing:
Fig. 1 schematically shows a first embodiment of a heating apparatus according to the invention;
Fig. 2 schematically shows a second embodiment of a heating apparatus according to the invention;
Fig. 3 schematically shows a third embodiment of a heating apparatus according to the invention;
Fig. 4 schematically shows a fourth embodiment of a heating apparatus according to the invention;
Fig. 5 schematically shows a fifth embodiment of a heating apparatus according to the invention;
Fig. 6 schematically shows a sixth embodiment of a heating apparatus according to the invention;
Fig. 6A shows an alternative embodiment of a heating apparatus according to Fig. 6;
Fig. 7 schematically shows a seventh embodiment of a heating apparatus according to the invention;
Fig. 8 schematically shows an eighth embodiment of a heating apparatus according to the invention;
Fig. 9 schematically shows a ninth embodiment of a heating apparatus according to the invention;
Fig. 10 schematically shows in cross-sectional side view a heating apparatus according to the invention in a house;
Fig. 11 shows a heating apparatus according to the invention arranged in a house in an alternative manner;
Fig. 12 shows a heating apparatus according to the invention arranged in a house in a further alternative manner;
Fig. 13 schematically shows a tenth embodiment of a heating apparatus according to the invention;
Fig. 14 schematically shows an eleventh embodiment of a heating apparatus according to the invention; and
Fig. 15 shows a cross section of a combined air supply/air discharge pipe.

In this description, identical or corresponding parts have identical or corresponding reference numerals. For identical or corresponding parts, identical or corresponding symbols have been used. A heating apparatus according to the invention will also be indicated as a hybrid boiler. In this application, central heating boiler is at least understood to include a substantially conventional central heating apparatus provided with a burner, in particular a fossil fuel-fired burner, such as a gas-fired burner, and a heat exchanger, for instance an aluminium cast heat exchanger in which heat exchange can take place between flue gases from the burner and water in a heating circuit. Such a central heating boiler can be designed in any suitable manner, for instance as an improved boiler or a high efficiency boiler, condensing boiler or the like. In this application, heat pump is at least understood to include an apparatus provided with at least one evaporator and a heat exchanger as well as a circuit through which a fluid, in particular a liquid or mixture of liquids and/or mixture of liquid and gas can be circulated, while in the evaporator, heat can be extracted from the surroundings, which, in the heat exchanger, can be given off to a liquid or gas to be used for space or sanitary water heating. In this application, evaporator is at least understood to include an apparatus in which, under the influence of heat extracted from the surroundings, evaporation of a liquid can take place.

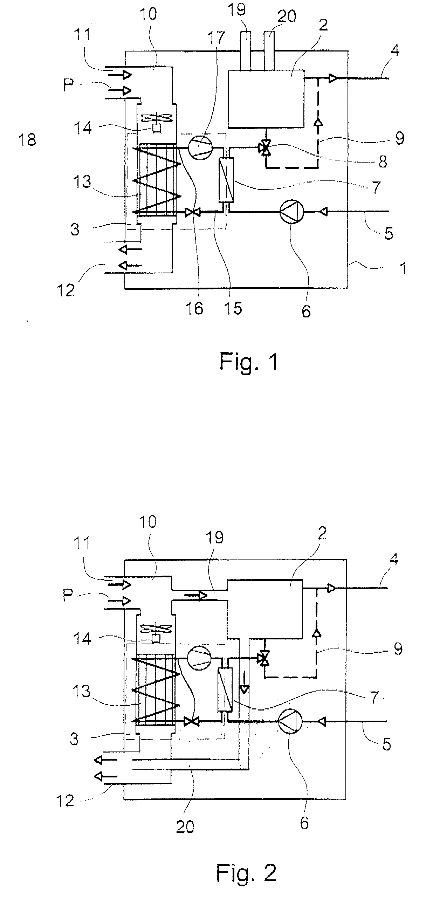

Fig. 1 schematically shows a heating apparatus 1 according to the invention, provided with a central heating boiler 2 and a heat pump 3, symbolically represented by a square represented in broken lines. In Fig. 1 on the right hand side, schematically, a supply pipe 4 and a return pipe 5 of a space heating circuit (not shown) are represented. The return pipe 5 connects to a pump 6 for circulating liquid through the circuit, the central heating boiler and a heat exchanger 7 of the heat pump 3. The heat exchanger 7 can for instance be a plate heat exchanger or any other suitable heat exchanger. The heat exchanger 7 as shown can also be indicated as a condenser. The heat exchanger 7 is included between the pump 6 and the central heating boiler 2. Between the heat exchanger 7 and the central heating boiler, optionally, a three-way valve 8 can be included, which, on the one side, connects to the central heating boiler 2 and, on the other side, via a bypass-pipe 9, connects to the supply pipe 4 so that the central heating boiler 2 can be bypassed through suitable control of the three-way valve 8.

The heating apparatus 1 is provided with an air channel 10 which, by a feed opening 11 and an output opening 12, is in communication with the outside air, at least with the surroundings of the heating apparatus 1. The flow direction in the air channel 10 is represented by arrows P and is directed from the feed opening 11 to the output opening 12. In the air channel 10, an evaporator 13 of the heat pump is arranged, as well as a fan 14 for leading outside air through and/or along the evaporator. The fan 14 is arranged upstream relative to the evaporator 13. A liquid channel 15, closed in itself, runs through the heat exchanger 7, a control valve 16, the evaporator 13 and a compressor 17, for circulating a fluid which can evaporate in the evaporator, at least partially, and can give off heat in the heat exchanger, for instance by, once again, becoming liquid. Such a principle of a heat pump is sufficiently known and will only be described herein where necessary for a better understanding of the invention.

A heating apparatus according to Fig. 1 can be used as follows.

With a suitable temperature of the ambient air 18, outside air is circulated through the air channel 10 with the aid of the fan 14, through and/or along the evaporator 13, while heat is extracted from the outside air 18 and given off to the liquid in the channel 15, so that this evaporates and is guided via the compressor 17 through the heat exchanger 7, in which heat is transferred to liquid circulated in the heating circuit with the aid of the pump 6. If sufficient heat is extracted from the ambient air for meeting the heat demand in the heating circuit, the central heating boiler 2 can remain switched off, and the liquid heated in the heat exchanger 7 is pumped directly to the supply pipe 4. Optionally, to that end, the bypass pipe 9 can be used, so that the central heating boiler 2 is kept out of the circuit.

If insufficient heat can be extracted from the surroundings with the aid of the heat pump and/or when this is energetically disadvantageous, the central heating boiler 2 can be switched on so that (additional) heat can be supplied to the liquid in the space heating circuit, for meeting the heat demand. Moreover, with the heating apparatus 1, in particular with the central heating boiler 2, if desired, a heat demand for sanitary water heating can be met.

If the ambient temperature 18 is relatively low, optionally, the heating apparatus 1 can be controlled such that only the central heating boiler 2 supplies heat to the liquid for the space heating circuit.

Tests have shown that in a particularly simple and energetically advantageous manner a heating apparatus 1 according to the invention can be controlled such that in the relatively cold seasons such as the winter only the central heating boiler is heated, that during the relatively warm seasons such as the summer only the heat pump 3 is operated and that during the intervening seasons, according to the heat demand and the outside temperature, a choice can be made between the central heating boiler, the heat pump or both. Naturally, depending on the ambient temperature, also in summer and winter a different control can be chosen.

In the embodiment shown in Fig. 1, the air supply 19 and flue gas discharge 20 of the central heating boiler 2 are directly guided outside, at a distance from the air channel 10. In the embodiment shown in Fig. 2, the air supply 19 and the flue gas discharge channel 20 terminate in the air channel 10, viewed in flow direction P in front of and behind, respectively, the fan 14 and the evaporator 13. Thus, at least the advantage is achieved that towards the surroundings, only the inlet 11 and the outlet 12 are necessary. The flue gas discharge 20 is then inserted into the air channel 10 to such an extent that it terminates adjacent the outlet 12.

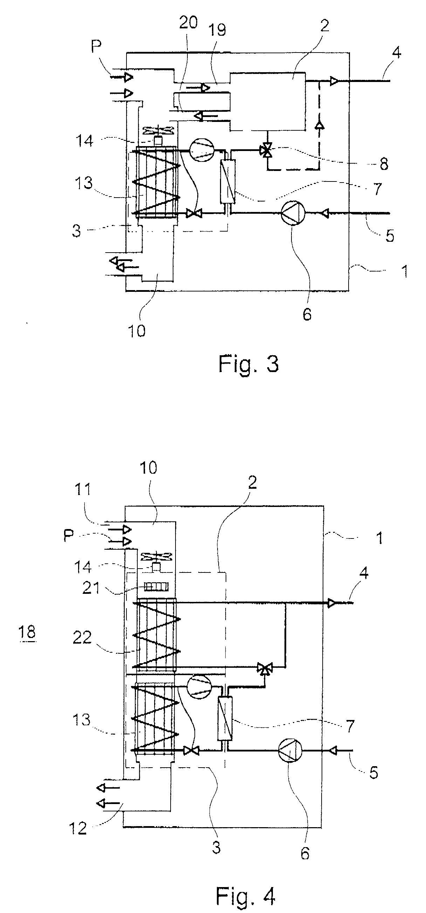

In Fig. 3, a third embodiment of a heating apparatus 1 according to the invention is shown, comparable to the one shown in Fig. 2, while, however, the air inlet 19 and the flue gas discharge 20 both, viewed in flow direction P, terminate in front of the fan 14 and the evaporator 13 in the air channel 10. What is thus achieved is that the heat in the flue gases of the central heating boiler 2 can be used in the evaporator 13, which may offer energetic advantages. It is noted that the flue gas discharge 20 can terminate at different positions, for instance between the fan 14 and the evaporator 13.

In Fig. 4, a further variant of a heating apparatus 1 according to the invention is shown, while a relatively long air channel 10 has been drawn, the central heating boiler 2 and the heat pump 3 being arranged one behind the other in flow direction P, in the embodiment shown behind the fan 14. In this embodiment, the burner 21 and the heat exchanger 22 of the central heating boiler 2 are disposed in the air channel 10 such that, via the heat exchanger 22 and the evaporator 13 of the heat pump 3, flue gases from the burner 21 (when the central heating boiler 2 is in operation) can be forced to the outlet 12 of the air channel 10, in particular through the fan 14. What is thus achieved is that no separate outlet is required for the flue gases, that no separate air supply is necessary for the burner 21 and that, moreover, heat from the flue gases can be used in the evaporator 13 when the central heating boiler 2 is in operation. An additional advantage of this set-up is that, with a low ambient temperature, the liquid in the circuit of the heat pump 3 will not freeze as heat of the burner 21 will prevent this. However, a control operating the burner 21 of the central heating boiler 2 will have to be provided for if the ambient temperature falls below freezing point, at least becomes so low that freezing of the water in the heating circuit could occur. In the embodiment of Fig. 4, only one fan is used, which is economically advantageous. As shown in Fig. 4, the fan 14 is arranged upstream relative to the evaporator 13. The fan is not located downstream of the burner 21, so that the fan is prevented from coming into contact with flue gases.

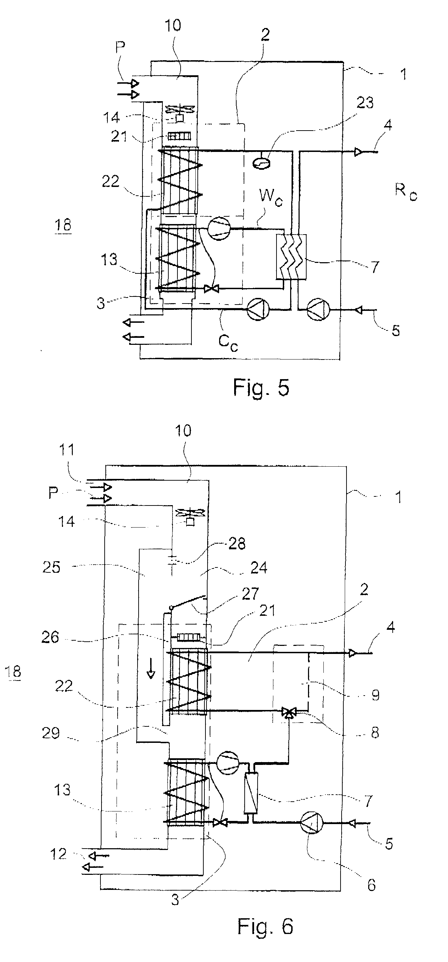

In Fig. 5, a fifth embodiment of a heating apparatus 1 according to the invention is shown, wherein, in a manner as shown in Fig. 4, the central heating boiler 2 and the heat pump 3 are arranged one behind the other in the air channel 10 in flow direction P. In this embodiment, a heat pump circuit W_{c} is provided, a central heating boiler circuit C_{c} and a space heating circuit R_{c} between the supply pipe 4 and the return pipe 5. The three circuits C_{c}, W_{c} and R_{c} are separated from each other and are directed all three through a heat exchanger 7 designed to that end, for instance a three-channel plate heat exchanger. The central heating circuit C_{c} is provided with an expansion tank 23 and is filled with, for instance, water with antifreeze or a different liquid with a relatively low freezing point. Thus, the danger of the heat exchanger 22 of the central heating boiler 2 freezing will be prevented. It is noted that instead of the three-channel plate heat exchanger, for instance two two-channel plate exchangers, each having two separate channels, can be used.

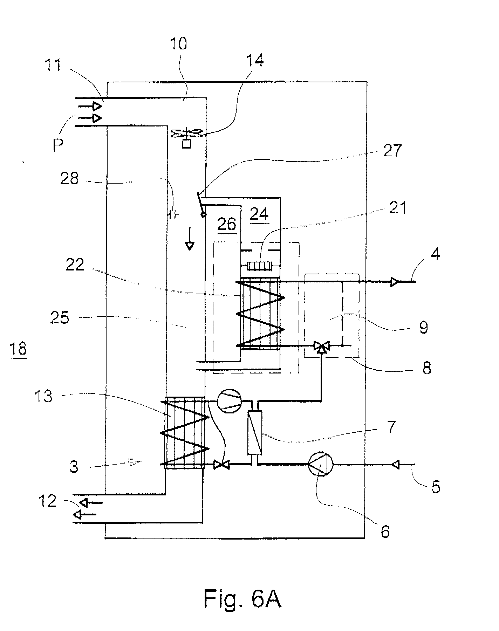

In Fig. 6, a sixth embodiment of a heating apparatus 1 according to the invention is shown, wherein between inlet 11 and outlet 12 the air channel 10 is divided, at least partly, into a first channel part 24 and, running parallel thereto, a second channel part 25, which channel parts are separated from each other by a partition wall 26. Between the first channel part 24 and, in flow direction P, the forward end of the second channel part 25, a diverter valve 27 and a leakage opening 28 are provided, behind the fan 14. In the first channel part 24, the burner 21 and the heat exchanger 22 of the central heating boiler 2 are arranged, while in this embodiment, the second channel part 25 is substantially open. Behind the first and second channel part 24, 25, after these have met in an opening 29, the evaporator 13 of the heat pump is arranged in the air channel 10.

During use, with the aid of the diverter valve 27 air can be guided from the feed opening 11 with the fan 14 either through the second air channel 25 (when the diverter valve 27 is arranged in the position shown in Fig. 6) or along the burner 21 and heat exchanger 22 if the diverter valve 27 substantially closes off the second air channel 25. Here, a portion of the air will be forced through the leakage opening 28, so that behind the heat exchanger 22 this air will be mixed with the flue gases of the central heating boiler 2 for cooling these, such that the temperature of the flue gases will be kept below the maximum allowable temperature of the fluid in the heat pump 3. In this embodiment, central heating boiler 2 and heat pump 3 can simply be operated simultaneously, while at low temperatures, the evaporator 13 can be protected from freezing or, conversely, if frozen, can be unfrozen by flue gases of the burner 21.

It will be clear that the second air channel 25 can be the straight channel and the heat exchanger can be placed in the side channel as shown in Fig. 6A.

In the embodiment shown, in particular according to Figs. 1, 2, 3, 4 and 6, the pump 6 can also, or even preferably, be placed between the heat exchanger or condenser 7 and the three-way valve 8.

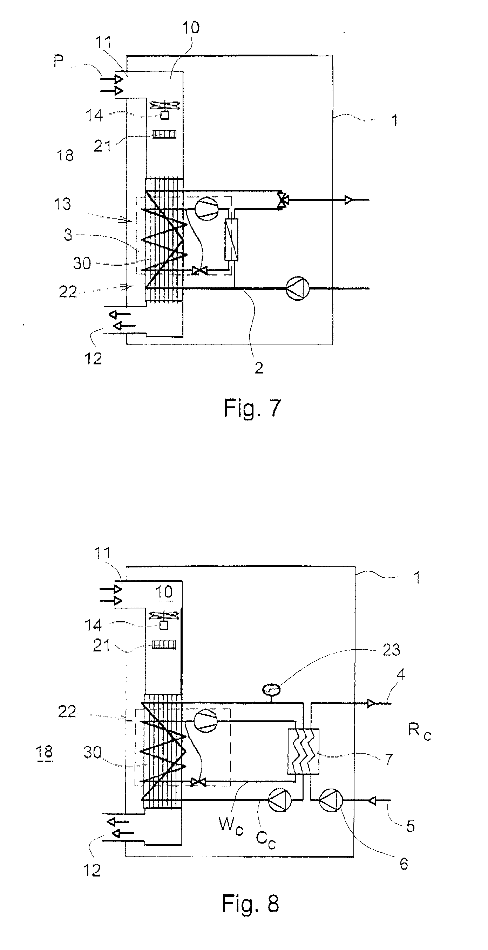

In Fig. 7, a seventh embodiment of a heating apparatus 1 according to the invention is shown, wherein the heat exchanger 22 of the central heating boiler 2 and the evaporator 13 of the heat pump 3 have been integrated in a single heat exchanger 30, disposed in the air channel 10, viewed in flow direction P behind the fan 14 and the burner 21. Thus, a particularly compact heating apparatus 1 is obtained, which can be designed to be relatively light and economically advantageous.

In Fig. 8, a heating apparatus 1 is shown, comparable to the one shown in Fig. 7, wherein however, as described with reference to Fig. 5, again, a heat pump circuit W_{c}, a central heating boiler circuit C_{c} and a space heating circuit R_{c} are provided, which circuits W_{c}, C_{c} and R_{c} are separated from each other and are guided through a heat exchanger 7 by three separate channels. With this, the advantage is achieved that in the central heating circuit C_{c}, a liquid can be used with a particularly low freezing point, for instance water with antifreeze, so that freezing of the integrated heat exchanger 30 can simply be prevented. Again, an expansion tank is provided within the central heating circuit C_{c}.

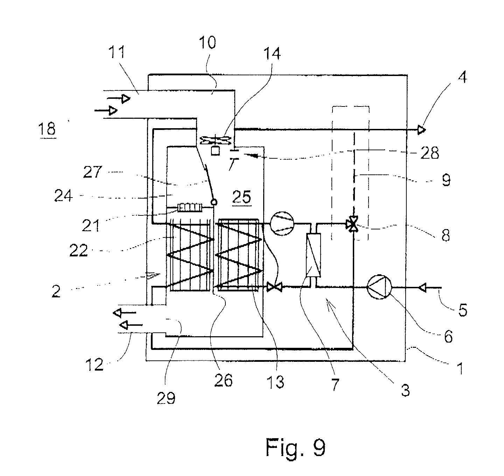

In Fig. 9, a ninth embodiment of a heating apparatus 1 according to the invention is shown, wherein, once again, the air channel 10 is divided into a first channel part 24 and a second channel part 25, mutually separated from each other by a partition wall 26. At the side located upstream, a diverter valve 27 is provided, as well as a leakage opening 28 to the second channel part 25, all this comparable to the embodiment according to Fig. 6. A fan 14 has been provided in the air channel 10. In the first channel part 24, a burner 21 and heat exchanger 22 of the central heating boiler 2 are provided, in the second channel part 25 the evaporator 13 of the heat pump 3. With the aid of the diverter valve 27 air from the surroundings 18 can be guided through the air channel 10 or along burner 21 and heat exchanger 22, or along the evaporator 13, or be divided therebetween. Each time, a portion of the air will flow via the leakage opening 28 through the second channel part 25 and be mixed behind the heat exchanger 22 of the central heating boiler 2 with the flue gases thereof if the burner 21 is switched on, so that the temperature of the flue gases is reduced to, for instance, less than 50°C, before this is discharged into the atmosphere 12 through the outlet opening 12. Such an embodiment offers the advantage that it can be of relatively compact and simple design and that it can be used in all situations described, while, depending on the heat demand, the ambient temperature and preferences of the user, the heat pump 3, the central heating boiler 2 or both can be taken into use.

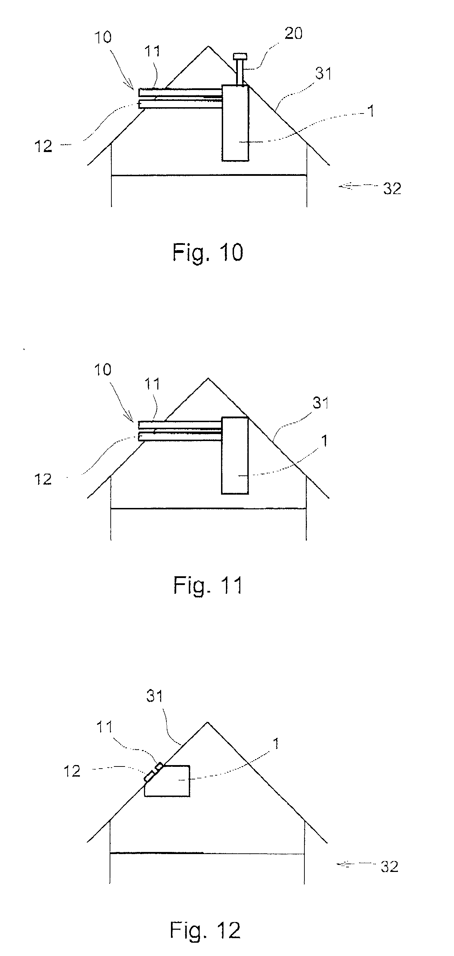

With an apparatus 1 according to the invention, preferably, use is made of modulating burners and means known per se such as outside temperature sensors, heating process regulators and the like. These are sufficiently known to the skilled person. In Figs. 10 - 12, three embodiments are shown of set-ups of a heating apparatus 1 according to the invention, wherein each time by way of example a set-up is shown below an inclining roof 31 of a house 32. It will be clear that in a comparable manner, also different positions for the apparatus 1 can be chosen.

In the embodiment shown in Fig. 10, the heating apparatus 1 is provided with a flue gas discharge 20, optionally combined with the air supply 19, although air can also be supplied from the surroundings of the heating apparatus 1. An air supply pipe 11 and an air discharge pipe 12 of the air channel 10 have been led through the roof 31 at a distance from the flue gas discharge 20. Such a set-up is particularly suitable for a heating apparatus according to Fig. 1.

In Fig. 11, the heating apparatus 1 runs through the roof 31 by an air inlet pipe 11 and an air outlet pipe 12 while the heating apparatus 1 can be designed according to, for instance, any of the variants of Figs. 2 - 9. To this end, only two roof passages are necessary.

In Fig. 12, a set-up is shown comparable to the one shown in Fig. 11, wherein, however, the heating apparatus 1 is disposed directly against an outer wall, or as shown here, a roof 31 of a house 32. The roof passages for the air inlet 11 and the air outlet 12 of the air channel 10 are visible. Such an embodiment is particularly compact and suitable as 'wall-mounted boiler'.

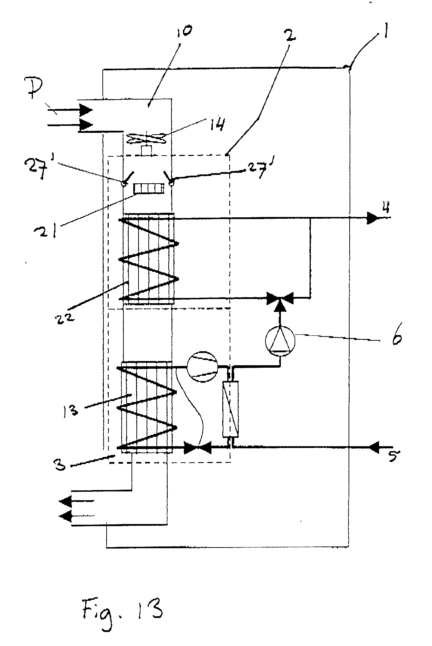

Fig. 13 shows an alternative, tenth embodiment of a heating apparatus 1 which partly corresponds to the apparatus shown in Fig. 6. In the exemplary embodiment of Fig. 13, the air channel 10 is not provided with a separate, second channel part, which renders the apparatus 1 relatively compact. Furthermore, the central heating pump 6 is arranged between the heat exchanger 7 and the three-way valve 8. As a consequence, the efficiency of the heat pump circuit can be enhanced.

In the tenth exemplary embodiment the air channel 10 is provided with valve means 27' which are arranged substantially parallel relative to the burner 21. With these valve means 27', the pressure in the air channel can be properly controlled for the purpose of a desired burner and/or heat pump operation with a relatively low fan capacity. This has the additional advantage that a relatively small fan 14 can be used, which saves space required for the fan as well as energy used by the fan.

With the tenth exemplary embodiment in operation, the valve means 27' can be shut, so that substantially all air supplied by the fan 14 is guided through the burner 21. As a result, a relatively large pressure drop across the burner 21 can be obtained. Such a high pressure drop is particularly advantageous in a modulating burner for the purpose of a proper gas-air mixture. The valve means 27' can be opened when the heat pump is in operation, so that air can flow along the burner 21. As a result, the fan 14 is considerably less loaded, which saves energy.

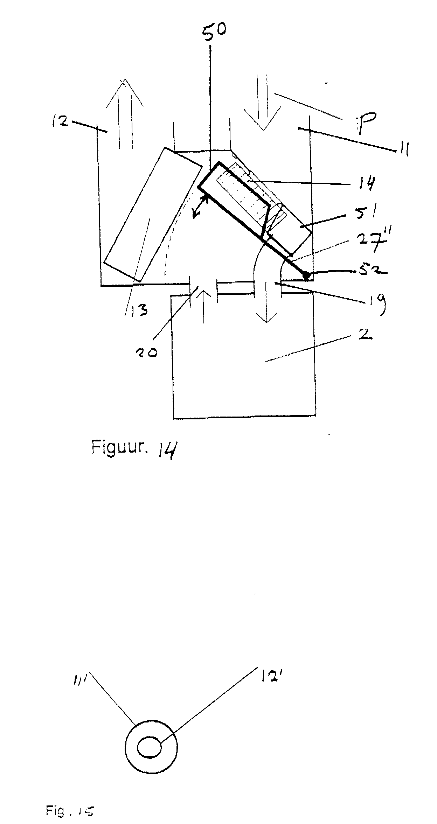

Fig. 14 schematically shows a part of an eleventh embodiment of a heating apparatus according to the invention, which is comparable to the one shown in Fig. 6A. The apparatus is provided with an air channel 10 with a fan 14 and valve means 27" for regulating the air passage through the channel 10. The valve means 27" comprise a spiral housing 50 which is moveable between substantially a first and a second position. In Fig. 14, an intermediate position of the spiral housing is represented. In the first position, the fan 14 is enveloped by the spiral housing 50. Here, air drawn in by the fan is guided via an outlet 51 of the spiral housing 50 via air inlet 19 to the central heating boiler 2. In a second position of the spiral housing 50, the spiral housing 50 is substantially moved away from the fan, so that air drawn in by the fan is led directly to the evaporator 13. Moreover, in this second position, a central heating air discharge 20 is closed off by the spiral housing 50. Furthermore, a fan pressure suitable for use can be properly set by moving the spiral housing 50 to a suitable position. Thus, the fan 14 can generate a suitable, relatively high pressure for a central heating boiler operation with the spiral housing in the first position. Moreover, the fan has a desired, relatively steep characteristic which is expressed in a relatively high pressure with a relatively small air displacement. In the second position of the spiral housing, a relatively limited load is put on the fan 14, which saves energy. In that second position, by contrast, the fan has a relatively flat characteristic, which is expressed in a low pressure with a high air displacement. This exemplary embodiment can also be designed to be particularly compact and energy-saving. Moving the spiral housing 50 can be done in various manners. In the exemplary embodiment shown, the valve means 27 with the spiral housing 50 is pivotable about a pivot 52.

The invention is not limited in any manner to the exemplary embodiments represented in the description and the drawing. Many variations thereon are possible within the framework of the invention as outlined by the claims.

For instance, the exemplary embodiments described can be combined with each other in various manners, for instance by combining one or more parts of one exemplary embodiment with one or more parts of another exemplary embodiment.

For instance, in a conventional manner, sanitary water heating means can be added, for instance by including a sanitary water channel in the heat exchanger of the central heating boiler 2. Other means can be provided for leading air through the air channel 10, while the fan 14 can also be disposed at a different position. Positioning the central heating boiler and the heat pump can be selected to be done in any suitable manner, depending on, for instance, the desired capacity, building volume and the like. Techniques known per se for manufacturing heat exchangers and/or evaporators and the like can be applied in a simple manner within the framework of the invention.

Further, the fan 14 can be arranged at various positions, for instance in the outlet opening 12, behind evaporator 13, or behind exchanger 30.

In addition, the hybrid boiler, which is provided with a first heating unit with a burner and a second heating unit provided with a heat pump, is preferably accommodated in a substantially closed housing. With such a closed apparatus, only outside air is supplied to the heating units via a suitable air supply, while flue gases are led back to the outside surroundings via a discharge.

Moreover, the air supply 11 and the air discharge 12 can be designed in various manners. An advantageous, compact design comprises a combined air supply/air discharge, an exemplary embodiment of which is represented in Fig. 15. Fig. 15 shows, in cross section, an air supply tube 11' through which extends, concentrically, a preferably insulated air discharge tube 12'.

These and many comparable variations are understood to fall within the framework of the invention as outlined by the claims.

## Claims

1. A heating apparatus, provided with a first heating unit with a burner and a second heating unit provided with a heat pump, both heating units being coupled to at least one heating circuit, in particular to a space heating circuit.

2. A heating apparatus according to claim 1, wherein the first heating unit comprises a burner and a first heat exchanger, while the burner can be fired with a fossil fuel such as gas or oil, the second heating unit comprising an evaporator and an electric pumping unit for circulating a fluid or fluid mixture, in particular a gas/liquid mixture, in the second heating unit, the second heating unit being provided with a second heat exchanger through which, on the one side, said fluid or fluid mixture is guided and which, on the other side, can be connected to, at least is included in said space heating circuit.

3. A heating apparatus according to claim 1 or 2, wherein the second heating unit is arranged as an electric heat pump and comprises a second heat exchanger, while return connecting means are provided on the second heat exchanger for connecting a return pipe of said space heating circuit.

4. A heating apparatus according to claim 3, wherein at the side of the second heat exchanger which, viewed in the flow direction, is remote from the return connecting means, further connecting means are provided for connecting the first heating apparatus thereto, such that water coming from the space heating circuit, during use, only flows into the first heating unit after this has passed the second heat exchanger.

5. A heating apparatus according to any one of the preceding claims, wherein an evaporator of the second heating unit is or can be included in a channel through which, during use, ambient air, in particular outside air, can be passed.

6. A heating apparatus according to claim 5, wherein in said channel a fan is provided for passing air through, at least along the evaporator.

7. A heating apparatus according to claim 5 or 6, wherein the first heating unit is provided with air supply means and flue gas discharge means which terminate at a distance from said channel.

8. A heating apparatus according to any one of claims 5 or 6, wherein the first heating apparatus is provided with flue gas discharge means which terminate in said channel.

9. A heating apparatus according to claim 8, wherein the flue gas discharge means terminate in the channel, viewed in flow direction in the channel, before the evaporator.

10. A heating apparatus according to claim 8, wherein the flue gas discharge means terminate in the channel, viewed in flow direction in the channel behind the evaporator.

11. A heating apparatus according to any one of claims 5, 6 or 8 - 10, wherein the flue gas supply means of the first heating unit connect to the channel, in particular before the evaporator.

12. A heating apparatus according to any one of claims 5 - 11, wherein a first heat exchanger of the first heating unit, preferably the first heat exchanger and the burner of the first heating unit, extend at least partly in said channel.

13. A heating apparatus according to claim 12, wherein said first heat exchanger and the evaporator, in flow direction of air in the channel, are arranged behind each other.

14. A heating apparatus according to claim 12, wherein said first heat exchanger and the evaporator, in flow direction of air in the channel, are arranged side by side.

15. A heating apparatus according to claim 13 or 14, wherein, over at least a part of its length, said channel comprises at least one first and one second channel part, side by side, while valve means are provided for guiding air through the first and/or the second channel part, while the first heat exchanger of the first heating unit is arranged in one of the channel parts, such that by controlling the valve means, air can be guided through the channel through said first heat exchanger or can be led through the other of the channel parts.

16. A heating apparatus according to claim 15, wherein, viewed in flow direction, at the downstream side, the two channel parts meet in a discharge channel part, while the evaporator of the second heating unit is arranged in said discharge channel part such that, by controlling the valve means, air can be guided through one or both channel parts, optionally through, at least along the first heat exchanger, and is forced through, at least along, the evaporator.

17. A heating apparatus according to claim 15, wherein the evaporator is arranged in the other of the two channel parts, such that air through the channel can only flow either through or along the first heat exchanger, or through or along the evaporator, or through or along both.

18. A heating apparatus according to any one of claims 14 - 17, wherein leakage means are provided such that irrespective of the position of the valve means at least a portion of the air flowing through the channel flows via the leakage means into the channel part where the first heat exchanger is not arranged.

19. A heating apparatus according to claim 12, wherein the first heat exchanger and the evaporator are at least partly integrated.

20. A heating apparatus according to any one of the preceding claims, wherein the first heating unit determines a first circuit, the second heating unit a second circuit and the heating circuit a third circuit, while the first, second and third circuit are led through the same heat exchanger.

21. A method for effecting at least space heating and/or sanitary water heating, wherein with a relatively great heat demand and/or with relatively great differences between an ambient temperature of a space to be heated or structure of spaces, and the desired temperature in said space or spaces, use is substantially made of a fired heating unit such as a central heating boiler with burner, while at a relatively low heat demand and/or relatively small differences between an ambient temperature of a space or structure of spaces to be heated and the desired temperature in said space or spaces, use is substantially made of a heat pump, in particular an electrically controlled heat pump while at least a portion of the required heat is extracted from the ambient air.

22. A method according to claim 21, wherein the fired heating unit and the heat pump are operated simultaneously, while flue gases of the heating unit are guided at least partly along or through an evaporator of the heat pump.

23. A method according to claim 21 or 22, wherein at least upon freezing of at least a part of the heat pump, in particular an evaporator thereof, , heat from the fired heating unit is guided along or through the heat pump, in particular said evaporator.

24. A heating apparatus according to claim 12, wherein said channel (10) is provided with valve means (27') which are arranged substantially parallel to said burner (21).

25. A heating apparatus according to at least claim 6, wherein said fan (14) is provided with a spiral housing (50).

26. A heating apparatus according to claim 25, wherein the spiral housing (50) can be moved between a first and a second position, while in said first position, the spiral housing envelops the fan (14), while in said second position, the spiral housing (5) is substantially moved away from the fan (14).

27. A heating apparatus according to at least claim 1, wherein the heating apparatus is accommodated within a substantially closed housing.

28. A heating apparatus according to at least claim 6, wherein the fan (14) is arranged upstream relative to the burner (21).
